(19) 

**Europäisches Patentamt**

**European Patent Office**

**Office européen des brevets**

(11) **EP 3 101 622 B1**

(12) **EUROPEAN PATENT SPECIFICATION**

(45) Date of publication and mention
of the grant of the patent:
**12.06.2019 Bulletin 2019/24**

(51) Int Cl.:
**G06T 3/40** (2006.01)

(21) Application number: **16159725.7**

(22) Date of filing: **10.03.2016**

(54) **AN IMAGE ACQUISITION SYSTEM**

BILDERFASSUNGSSYSTEM

SYSTÈME D'ACQUISITION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2015 US 201514728939**

(43) Date of publication of application:
**07.12.2016 Bulletin 2016/49**

(73) Proprietor: **FotoNation Limited
H91 R2E9 Co. Galway (IE)**

(72) Inventors:
 • **STEC, Piotr**
 **Co. Galway, H91 R2E9 (IE)**
 • **POSOSIN, Alexei**
 **Co. Galway, H91 R2E9 (IE)**
 • **MUNTEANU, Mihai Constantin**
 **500152 Brasov (RO)**
 • **ZAHARIA, Corneliu**
 **500152 Brasov (RO)**
 • **GEORGESCU, Vlad**
 **500152 Brasov (RO)**

(74) Representative: **Hanna Moore + Curley
Garryard House
25/26 Earlsfort Terrace
Dublin 2, D02 PX51 (IE)**

(56) References cited:
 **WO-A1-2014/005783    WO-A2-2010/051147
 US-B2- 6 614 553**

• **SUHAIB A FAHMY: "Generalised Parallel Bilinear Interpolation Architecture for Vision Systems", RECONFIGURABLE COMPUTING AND FPGAS, 2008. RECONFIG '08. INTERNATIONAL CONFERENCE ON, IEEE, PISCATAWAY, NJ, USA, 3 December 2008 (2008-12-03), pages 331-336, XP031382695,**
• **K.T GRIBBON ET AL: "A novel approach to real-time bilinear interpolation", ELECTRONIC DESIGN, TEST AND APPLICATIONS, 2004. DELTA 2004. SECOND IEE E INTERNATIONAL WORKSHOP ON PERTH, AUSTRALIA 28-30 JAN. 2004, 1 January 2004 (2004-01-01), pages 126-131, XP055315118,**
• **K T Gribbon ET AL: "A Real-time FPGA Implementation of a Barrel Distortion Correction Algorithm with Bilinear Interpolation", Proceedings of Image and Vision Computing New Zealand, 1 November 2003 (2003-11-01), pages 408-413, XP055091030, Palmerston North Retrieved from the Internet: URL:http://www-ist.massey.ac.nz/dbailey/sp rg/ivcnz/Proceedings/IVCNZ_73.pdf [retrieved on 2013-12-02]**
• **C T Johnston ET AL: "Implementing Image Processing Algorithms on FPGAs", , 1 January 2004 (2004-01-01), XP055315850, Retrieved from the Internet: URL:http://sprg.massey.ac.nz/pdfs/2004_ENZ CON_118.pdf [retrieved on 2016-11-02]**
• **DAVID EADIE ET AL: "Correction of geometric image distortion using FPGAs", OPTICAL SENSING II, vol. 4877, 17 March 2003 (2003-03-17), XP055315120, 1000 20th St. Bellingham WA 98225-6705 USA**

**(Cont. next page)**

- **C. John Moses ET AL: "VLSI Architectures for Image Interpolation: A Survey", VLSI Design, 1 January 2014 (2014-01-01), pages 1-10, XP055315112, New York Retrieved from the Internet: URL:http://downloads.hindawi.com/journals/vlsi/2014/872501.pdf**

**Description**

**Field**

This invention relates to an image acquisition system.

**Background**

WO2014/005783 (Ref: FN-384-PCT) discloses a system and method for correcting a distorted input image including determining a local region of an image to be displayed and dividing said region into an array of rectangular tiles, each tile corresponding to a distorted tile with a non-rectangular boundary within said input image. For each tile of the local region, maximum and minimum memory address locations of successive rows of said input image sufficient to span said boundary of said distorted tile are determined. Successive rows of the distorted input from between said maximum and minimum addresses are read. Distortion of the non-rectangular portion of said distorted input image is corrected to provide a tile of a corrected output image which is stored.

US 2010/0111440 and WO 2010/051147, Chai disclose a distortion correction module which partitions coordinate points in a selected output image into tiles. The output image is an undistorted rendition of a subset of the lens-distorted image. Coordinate points on a border of the tiles in the output image are selected. For each tile, coordinate points in the lens-distorted image corresponding to each selected coordinate point in the output image are calculated. In addition, for each tile, a bounding box on the lens-distorted image is selected. The bounding box includes the calculated coordinates in the lens-distorted image. The bounding boxes are expanded so that they encompass all coordinate points in the lens-distorted image that map to all coordinate points in their respective corresponding tiles. Output pixel values are generated for each tile from pixel values in their corresponding expanded bounding boxes.

**Summary**

According to the present invention there is provided an image acquisition system as claimed in claim 1.

Embodiments of the present invention obtain a locally uniform image frame by dynamically adjusting a mapping between rectangular grid regions within a desired view to be presented on a display, or otherwise stored for viewing and the actual sensor surface. This mapping can change from frame to frame and indeed within a frame and is driven both by the relative position of a moving target relative to the image acquisition device as well as through user interaction with a camera application for example, determining a size of a region of interest (ROI) within a field of view i.e. zooming in on a field of view.

Embodiments of the invention provide a distortion adjusting engine which copes with multiple sources of distortion and which can dynamically adjust the overall mapping of pixels from the sensor surface to generate the final rectilinear grid of display pixels on an output display or for storing or compressing into a conventional video format.

**Brief Description of the Drawings**

An embodiment of the invention will now be described, by way of example, with reference to the accompanying drawings, in which:

Figure 1 shows schematically a geometrical distortion engine (GDE) as disclosed in WO2014/005783;
Figure 2 shows data flow within the GDE of Figure 1;
Figure 3 shows the structure of the Grid Formatter (GFU) of Figure 1;
Figure 4(a) shows tile transformation;
Figure 4(b) shows an example of a tile transformed according to an embodiment of the present invention;
Figure 4(c) show an example of Bresenham's line algorithm for determining pixels lying along the border of a tile;
Figure 4(d) shows how a tile border produced using the algorithm of Figure 4(b) is extended;
Figure 5 shows the structure of a Geometrical Distortion Core (GDC) of Figure 1;
Figure 6 shows tile cache pixels used to generate output image pixels according to an embodiment of the present invention;
Figure 7 shows an example of interleaved memory employed in one embodiment; and
Figure 8 shows tile cache pixels used to generate output image pixels in another embodiment.

**Description of the Preferred Embodiment**

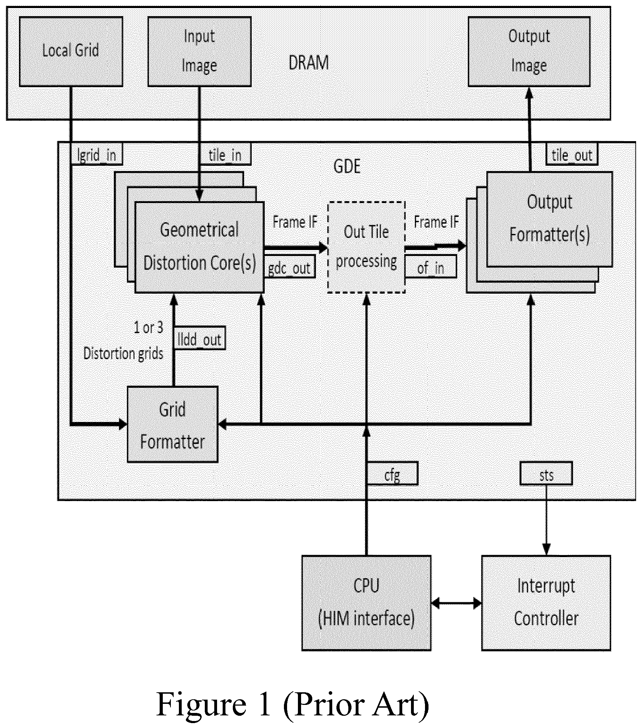

Referring now to Figure 1, the basic structure of an engine for handling geometrical distortion within images in a digital image acquisition device as disclosed in WO2014/005783 is shown. As will be explained in detail below, the Geometrical Distortion Engine (GDE) is capable of effectively removing distortions introduced by for example, a WFOV lens system, but also for compensating for distortion caused by for example, camera shake, and for correcting distortion introduced by a device user through interaction with an application running on or in communication with the acquisition device. Such user-defined distortion can require an affine transformation, colour transformation or image morphing to apply particular effects to the image and indeed sequence of images being acquired by the device.

Distortion processing on each color plane of an image, for example RGB, YUV or LAB is independent of the others, and so within the GDE, a single geometrical distortion core (GDC) processes only one color plane, so providing greater flexibility at the system level. A single GDC can process each color plane sequentially or more instances of GDC (such as shown in Figure 1) can process all planes of an image at the same time.

In the present specification, the term grid is used to refer to an array of tiles. Each tile is defined by its four corners and these are referred to as nodes. A transformation maps the coordinates of nodes within a grid according to a given distortion to be corrected.

The GDC processes an input image plane tile by tile under the control of a Grid Formatter Unit (GFU). The GDC fetches input tiles (tile_in) from the DRAM according to the addresses provided by the GFU and processes them, producing the corrected pixels for respective output tiles (gdc_out) in normal raster order.

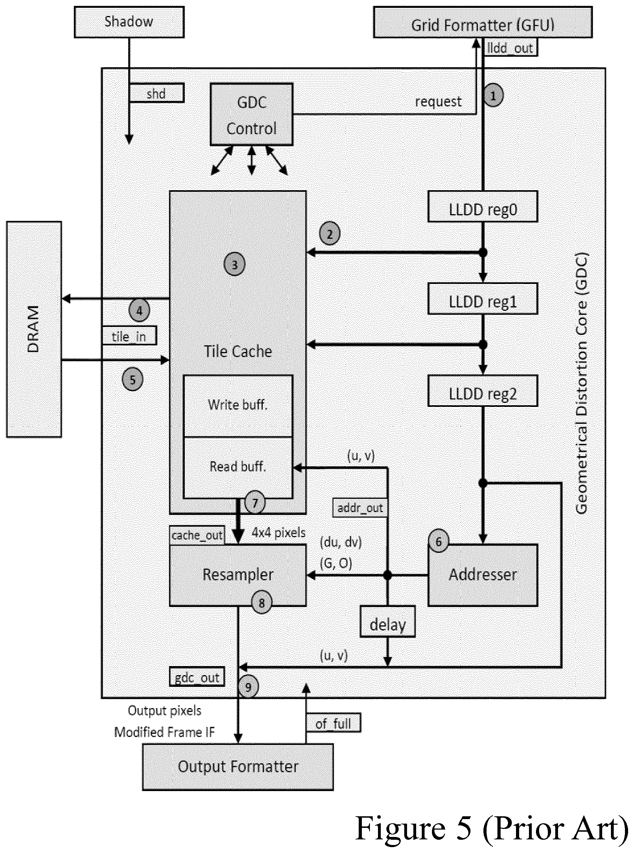

Only the information required for correcting a given distorted tile of the input image is read from memory into a tile cache (Figure 5) of the GDC. Thus, the four nodes defined for each tile to be read from DRAM do not define a rectangle - they define a polygon which in turn is used to determine the image information read from DRAM for a tile.

The distortion function applied by the GDC to each tile is not alone governed by the need to correct for WFOV lens system distortion, but also for other distortion effects which can include camera shake, user defined distortion and lens-sensor misalignment (sensor tilt).

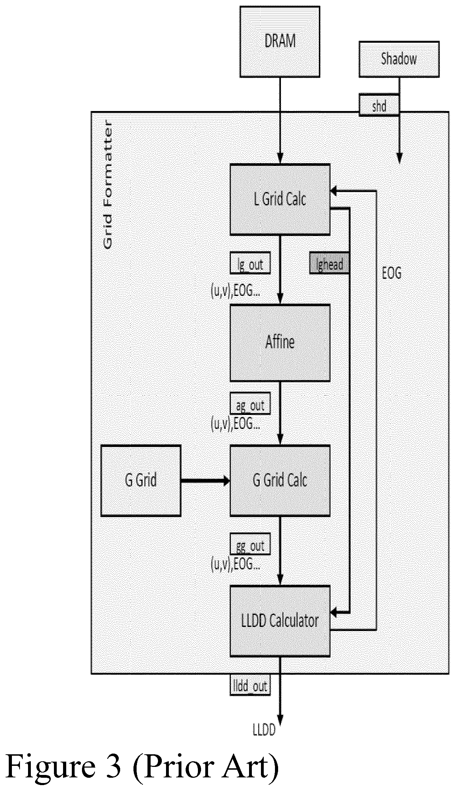

As will be described in more detail in relation to Figure 3, the GFU combines local grid information taken from DRAM, an affine transformation matrix and global grid information and produces the Low Level Distortion Descriptors (LLDD) for each tile of the grid from within a sensed image which is to be processed by the or each GDC. These descriptors are employed by the or each GDC to read correct image tile information from memory and to correct the image tile.

In the present description, Local Grid relates to the area of interest within field of view where the image is to be corrected for example for subsequent display. So for example, if in an image stream, a face detector (FD) (not shown), detects a face region within a field of view, an application fed from the FD could decide that a (rectangular) region bounding this face represents a region of interest. The coordinates defining this region are then written to a "Local Grid" region of DRAM and this region will be processed by the GDE. Thus for any given frame, at least one Local Grid must be stored in memory defining a region of the field of view which is to be corrected. As a face moves across the field of view of the camera, the Local Grid can be shifted from frame to frame. Equally, if more than one face is detected, more than one Local Grid will be stored in memory and each Local Grid will be processed by the GDE in turn (as such the description of the processing of each Local Grid can be treated independently).

The corrected grids of the complete image could for example be displayed superimposed over the remaining portions of the image, so that for example faces which are detected at the extreme edges of the field of view of a WFOV lens system can be displayed undistorted.

The Affine Transformation enables the GDC to correct either for example, for movement from frame to frame or indeed to compensate for changes or misalignment between lens and image sensor (Global Affine); or for example, distortion caused by rolling shutter (Local Affine). Thus, in the case of local affine transformation, the mapping of node locations from one portion of the Local Grid of an input image to the output image could be different from the mapping from another portion of the Local Grid and this is implemented by specifying sequences of nodes for which given transformations apply as will be explained in more detail below.

The Global Transformation is in general fixed for a given lens. For a typical WFOV lens, the transformation takes into account the deviation caused by a given lens away from a nominal mapping of field of view to an image sensor (not shown). For a zoom lens, the Global Transformation is fixed for a given focal length; or for a lens such as used sometimes in a security camera where the image sensor can rotate relate to the lens system, the Global Transformation is fixed for a given angle of the image sensor to the lens system. This mapping is therefore stored within the GFU where it is only rarely updated or, except in the case of a zoom lens, it is at least unlikely to be updated on a real-time frame-by-frame basis as an image stream is captured.

Referring back to Figure 1, an output formatter takes corrected image tiles (of_in) and writes these into Output Images in bursts back to the DRAM memory.

Extra "Out Tile" processing blocks can be inserted between the GDC and the output formatter. In embodiments, the output format of each GDC is in a standard frame format so each tile output by the GDC can be treated as a separate image, meaning that any "Out Tile" processing block that has a frame interface input/output can be inserted between the GDC and output formatter. The extra processing blocks can be any blocks that process a pixel deep image stream, for example gamma correction, colour enhancement or high dynamic range processing. They can also be blocks where a second image source is needed, for example, for alpha blending.

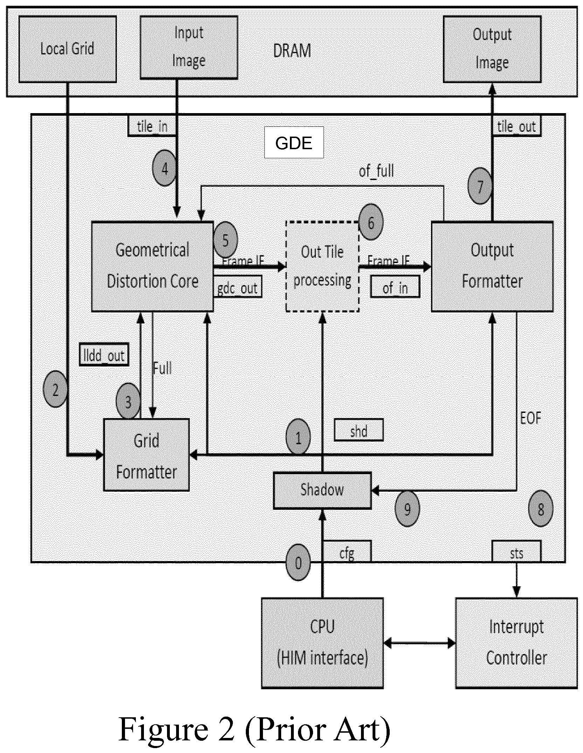

Referring now to Figure 2, which shows the operation of the GDE for a given image plane in more detail:

> 0 The CPU programs the GFU and the other blocks.
> 1 When the GDE block is enabled, the configuration from the CPU is copied into internal shadow registers via the cfg interface. The main purpose of the shadow registers bank is to provide constant configuration inputs to the internal GDE blocks during processing of a given image frame while allowing the CPU to prepare the configuration for the next image frame. As such the contents of the shadow registers are in general stable for the whole processing time of a frame.

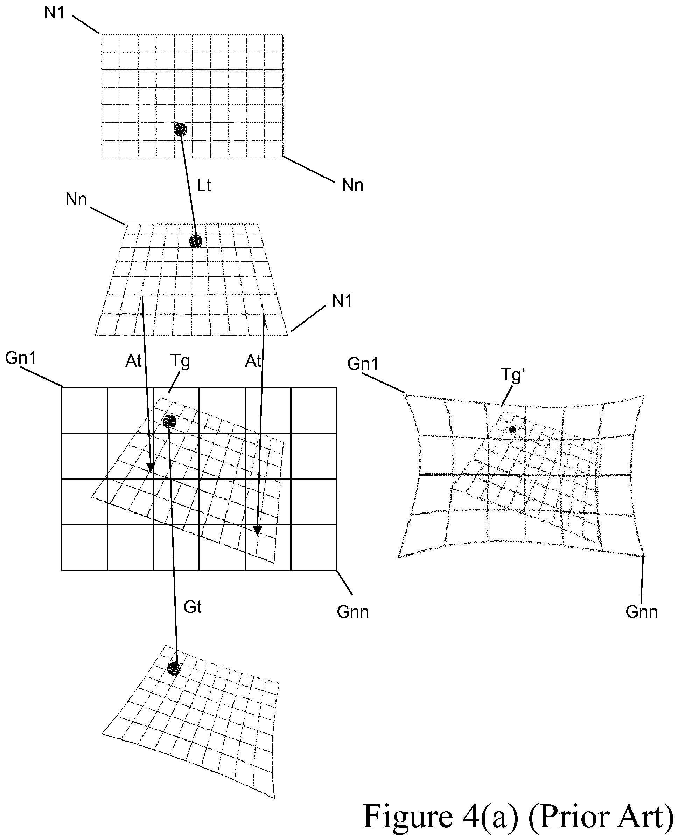

2 Referring to Figure 3, the GFU fetches a local grid header from the DRAM. The header contains information about local grid location in the output image space, grid dimension expressed in number of nodes, and the single cell (tile) size. The output image grid is rectangular and so this information is enough to describe the whole local grid in the output image space. The header is followed by the nodes containing coordinates in the input image space and variations in those coordinates describe the distortion associated with the local grid. So referring to the example of Figure 4(a), the local grid transformation (Lt) defines for each node of the Local Grid, the change in node coordinate information. In the example of Figure 4(a), the local grid comprising nodes N1 ...Nn undergoes a flip and perspective transformation and so could compensate for varying rotation of the image sensor relative to the lens assembly (not shown)as well as for simulating or compensating for a mirror view. So we can see node N1 moves from the top left to the bottom right and vice versa with node Nn, and that the transformed top of the local grid becomes more compressed than the bottom. The effect of the local grid transformation on the geometry and location of a specific tile is also illustrated.

Also, the local grid transformation can compensate for varying distortion caused by changes in perspective for different local regions within an input image - particularly in the case of WFOV systems. Thus, the local grid can help to compensate for the greater degree of distortion found in faces at the edge of a wide field of view vis-à-vis those located (or detected) at the centre of the field of view.

Values from the local grid header are used by L Grid Calc to setup registers responsible for accessing the local grid information from DRAM. After this, the GFU starts to read local grid node coefficients from DRAM one by one. The transformed coordinates for the grid nodes are then passed to an Affine block (if enabled). In the embodiment, the Affine block multiplies input node coordinates u,v by a 2x3 matrix comprising coefficients a1...a6 of the Affine Transformation (At) in order to produce output coordinate values u',v':

$$\begin{bmatrix} u' \\ v' \end{bmatrix} = \begin{bmatrix} a1 & a2 \\ a3 & a4 \end{bmatrix} \begin{bmatrix} u \\ v \end{bmatrix} + \begin{bmatrix} a5 \\ a6 \end{bmatrix}$$

In an alternative implementation, the above Affine transformation can be extended to provide an extended transformation which can correct for perspective. Here, the transformation block multiplies input node coordinates u,v by a matrix comprising coefficients a1 ...a9 in order to produce output coordinate values u',v':

$$\begin{bmatrix} u' \\ v' \end{bmatrix} = \left( \begin{bmatrix} a1 & a2 \\ a3 & a4 \end{bmatrix} \begin{bmatrix} u \\ v \end{bmatrix} + \begin{bmatrix} a5 \\ a6 \end{bmatrix} \right) * D$$

where $D = 1/(u * a7 + v * a8 + a9)$. Thus, if a7=a8=0 and a9=1 the transform is an affine transform as above. In other cases a7 and a8 can be varied with a9 fixed and equal to 1. However, enabling a7, a8 and a9 to be varied provides for the most flexible solution.

In still further implementations, the affine transformation can be adapted to correct for two perspective transformations, using a homography matrix with suitably defined coefficients.

The values of those matrix coefficients a1 ...a6 and possibly a7, a8 and/or a9 are stored in the registers internal to the GFU. These internal GFU registers holding coefficient values can be programmed twofold: in a first mode, Global Affine Transform mentioned above, they can be programmed by the CPU before the start of the frame processing and their values are kept constant for all local grids of a whole frame; and in the second mode, Local Affine Transform, values of the shadow registers are read from DRAM together with a node index that indicates when a new set of affine transformation coefficients must be loaded. For example, if a first set of node coefficients is loaded together with an index 100, this transform is applied to the nodes 0 to 99 and before node 100 is processed a new set of transformation coefficients is loaded from DRAM and applied to the subsequent nodes until the next change is indicated. As mentioned above, the second mode allows for dynamic transformation updates and correction for example, of rolling shutter distortions together with camera shake compensation. Thus, it will be seen that in this example, the Affine Transformation comprises a formulaic transformation of node coordinate locations from the local transformation (Lt). In the present example show in Figure 4(a), the affine transformation (At) comprises a global affine transformation rotating the entire grid and so could compensate for a rotational misalignment in a plane parallel to the plane of the image sensor between lens and image sensor.

The coordinates that are produced by the Affine block of Figure 3 are then passed to the global correction block G Grid Calc. This block applies warping distortion to the input local and/or affine transformed node coordinates with the distortion defined by means of a regular grid of nodes (G in Figure 4(a)) with nodes distributed regularly in the input coordinates space and the values stored in the nodes point to locations on the sensor image space. This provides mapping from the regular to distorted coordinate system with intermediate coordinate values (not belonging to the grid nodes) obtained using bicubic interpolation. The values of the coordinates of the global grid nodes are stored in the internal registers and can be updated after the end of each frame to allow for dynamic changes to the correction for lens distortion that is required in case of zoom lenses where distortion changes shape with change of the focal length. The final node coordinate values from the global transformation are passed to the LLDD Calculator input queue.

So again referring to the example of Figure 4(a), the global transformation (Gt) comprises a mapping of node coordinates Gn1 to Gnn of a Global Grid for example to take into account lens distortion. For a given node coordinate after Affine Transformation (At) and or Local Grid transformation (Lt), G Grid Calc finds the nodes of the Global Grid surrounding that location and interpolates the mapping of those nodes of the Global Grid tile to the node of the local and/or affine transformed node of the local grid to determine the Global Transform (Gt) of that node location. In the example of Figure 4(a), for nodes within the tile Tg of the global grid, the mapping of the coordinates of the tile Tg to the transformed file Tg' is interpolated and applied to local and/or affine transformed node coefficients to finalise the transformation of the original node coordinates. Thus for any node N, the complete transformation becomes Gt(At(Lt(N))).

When the LLDD Calculator input queue contains a number of nodes equal to grid width + 2 (a full tile), it uses them to prepare an LLDD descriptor that contains a full definition of the input tile. The definition contains location of the tile on the sensor image and partial differences that will be used by an address calculator (Figure 5) to calculate locations of all the pixels belonging to this particular tile. The complete LLDD descriptors are loaded to the LLDD FIFO (lldd_out).

> 3 Referring back to Figure 2, the GFU fills the LLDD FIFO of the GDC with descriptor data for each tile to be processed
> 4 The GDC fetches the input image tile by tile, with a new tile for every LLDD FIFO entry.
> 5 The GDC processes each tile and outputs the corrected tiles in frame interface format. A backpressure signal path from the output formatter to the GFU enables the GFU to stall the GDC if the output formatter is full.
> 6 Optional processing algorithms can be applied on the GDC corrected tiles.
> 7 The output formatter writes the corrected tiles (tile_out) of the output image into the memory.
> 8 When processing of a given Local Grid tile is completed and when the frame is completed, the output formatter signals this using an interrupt signal provided through a status interface (sts) to an interrupt controller.
> 9 If the GDE is still enabled when the frame is completed (EOF), the shadow register values are updated for the next frame.

Referring to Figure 3, as indicated above, the GFU combines basic local grid information obtained by the L Grid Calc block from DRAM, affine transformation matrix and the global distortion grid information stored within the block G Grid and obtained from the Shadow Registers and generates the LLDD descriptor information for each tile.

When the GFU is enabled, the L Grid Calc block starts reading the local distortion grid (defining Lt in Figure 4(a)) from the Local Grid information in DRAM. There must be at least one local grid for a frame - otherwise whatever application is running in the acquisition device has determined that there is no particular region of interest where distortion correction is required, for example, no faces have been detected or are being tracked. Multiple local grids are stored one after another in the memory, each local grid comprising a header followed by the nodes of the grid that contain points coordinates in the distorted image space.

The Affine transformation block applies a user defined affine transformation (At in Figure 4(a)) to the (u, v) coordinates produced by the L Grid Calc block. The Affine block performs a simple affine transformation on the (u,v) coordinates from the L Grid Calc block. As described at step 2 above, the Affine block has two operating modes where a) the affine coefficients are taken from the internal GFU registers corresponding to the shadow registers meaning that they are constant through the frame; and b) the coefficients are taken from the internal GFU registers and can change during the frame.

The G Grid calculation block calculates the final distorted grid, by performing spline interpolation based on the global grid points (Gn in Figure 4(a)) obtained from G Grid.

When reading the last node of the last tile of the current local grid, L Grid Calc asserts an End of Grid (EOG) flag. The grid coordinates in input space (u,v) and output space (x,y) together with the EOG flag are sent to the next block in the pipe - in this case Affine. The next blocks in the pipe (Affine, Global Grid calculation) use the same interface, meaning that the Affine or the Global Grid Calculator blocks can be swapped or removed from the pipeline. The (u,v) coordinate is processed by the Affine and Global Grid calculator - other image fields in the header are passed down the pipeline unchanged.

The final distortion descriptors for each tile of the grid are calculated by an LLDD Calculator. The LLDD Calculator block combines the header information provided on an Ighead interface with the descriptor fields and sends them on the lldd_out interface. The L Grid Calc block does not start processing a new grid until the LLDD Calculator block signals with an EOG signal that the last tile of the current grid is processed. This ensures that the signals on the Ighead interface are constant for all tiles of a local grid.

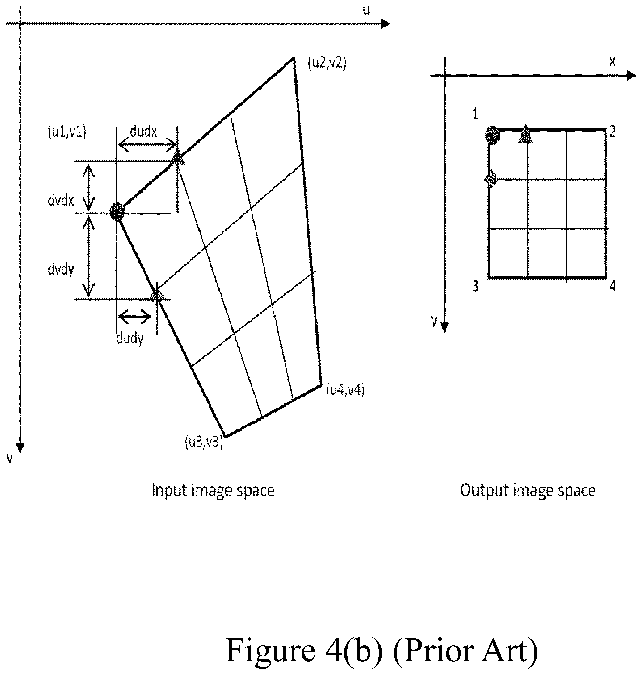

Figure 4(b) shows a tile in the output (right) and the input (left) image space. For exemplary purposes, the tile contains 4x4 pixels. The LLDD Calculator gets the coordinates of the four corners (u1,v1) to (u4,v4) and calculates the partial differences (dudx, dvdx, etc) needed by an addresser within the GDC for the linear interpolation of each pixels (u,v) coordinates. As indicated above, knowing the various transformations required to compensate for camera, movement and user determined distortion, the LLD calculator can determine the required area of input image space defined by (u1,v1)...(u4,v4) to bounded output image space defined by nodes 1, 2, 3, 4.

However, when interpolating input image data to calculate output image values, data for points outside the boundary defined by the vertices (u1,v1)...(u4,v4) can be required.

The LLDD Calculator could therefore be used to determine the memory addresses corresponding to the tile border and to extend the memory addresses around this border for each tile using for example, a variation of Bresenham's line algorithm.

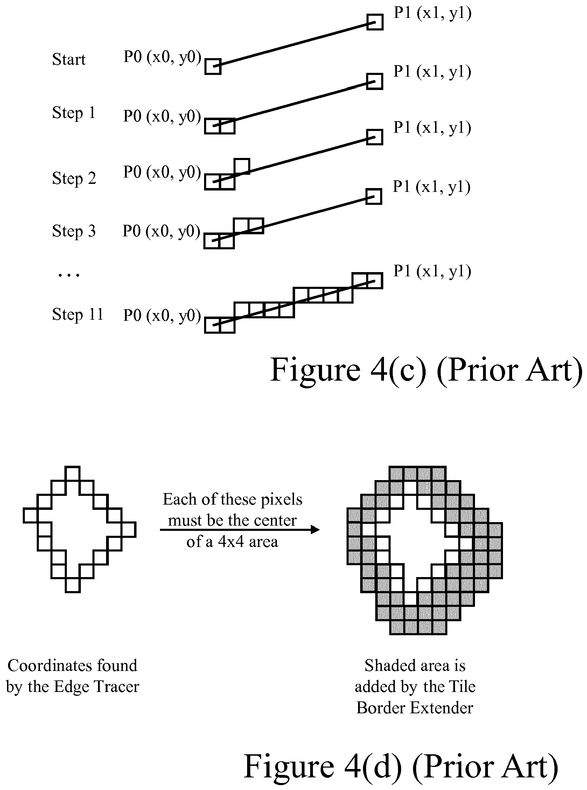

Figure 4(c) shows an example of the steps performed by such an LLDD Calculator module. Here, the module takes the first and last point of each edge (u1,v1 and u2,v2; u2,v2 and u4,v4 etc) and computes (one by one) the coordinates of the pixels located on the line that is described by those 2 points.

Each edges (x,y) coordinates are analyzed and the minimum and maximum x coordinates of each line in DRAM from which tile information is to be read by the GDC are stored in respective memories Max and Min. The y coordinate represents the memory address. After an edge tracer within LLDD Calculator finishes all 4 edges of a tile, it sends a ready indication to a tile border extender module within LLDD Calculator. This extender module extends the start/end coordinates produced by the edge tracer. The extension is needed because a 4x4 pixels area is needed around each pixel and the coordinates computed by the edge tracer must be changed to include all the pixels needed. The extender module reads the 2 memories Max and Min and determines the final start/end coordinates of the pixels of each line of the tile as shown in Figure 4(d).

Thus, the above LLDD Calculator takes transformed node coordinates for a tile provided by G Grid Calc (or indeed any of the previous transformations) and provides the non-rectangular strips of memory addresses running from Min to Max for each line of the input image for a tile to be read from memory by the GDC when correcting the input image.

In an alternative implementation, rather than providing the actual memory addresses to be read by the GDC, LLDD Calculator simply provides the tile descriptor information illustrated in Figure 4(b) and the tracing/extending functionality described above for converting this descriptor information to memory addresses is implemented within the GDC as described below.

Referring to Figure 5, there is shown a block diagram of the Geometrical Distortion Core disclosed in WO2014/005783. The main sub-blocks are:

Geometric Distortion Core (GDC) Control - the main control sub-block

LLDD Registers - Low Level Distortion Description Registers. Each time the LLDD for a new tile is requested from the GFU, these registers are shifted. There are two such registers as there can be data for up to three tiles in the pipe at one time.

Tile Cache - a double buffered cache which contains **a Burst Calculation** module (not shown) which calculates the burst accesses needed to fill the tile cache and load the cache with data from the DRAM

Addresser - for each pixel in the output tile (in raster order), it calculates:

- coordinates of the 4x4 pixels window from the required from the Tile cache
- sub-pixels (dx,dy) for the Resampler
- color offset and gain for the resampler output

Resampler - a bicubic resampler which produces an interpolated pixel value from a 4x4 pixel input.

Referring to the steps indicated in Figure 5, the GDC operates generally as follows:

Prepare input tile and load to Tile Cache:

1 The GDC control block requests a new distortion descriptor LLDD for a tile. In this example, it is assumed that LLDD Calculator provides descriptor information as shown in Figure 4(b) from the GFU and memory addresses are calculated by the Tile Cache;
2 Once the pipeline allows a new tile to be prepared, the Burst Calculation module within the tile cache starts working on the LLDD descriptor data from the GFU;
3 The Burst Calculation module calculates one by one the burst requests for the tile;
4 The Burst Calculation module requests the burst data from the DRAM based on LLDD information;
5 The Burst data is received from the DRAM and written to the Tile cache.

Process Tile:

6 For each output tile pixel, the addresser calculates the address of each 4x4 pixels block and the parameters for the Resampler
7 The 4x4 pixels window is fetched from the Tile Cache
8 The Resampler calculates the resampled output pixel
9. The signals for the gdc_out interface are assembled together. It contains:

- pixel data from the Resampler
- Frame control signals from the addresser
- Tile control signals from the LLDD FIFO

• Output local grid information from the lg-head register

Referring to steps 7 and 8 above, in Figure 5, the output tile is scanned in raster order and, for each pixel of the output tile, the re-sampler acquires a window of 4x4 pixels from the tile cache in order to perform a bi-cubic interpolation of those pixel values and to generate the pixel value for the output tile.

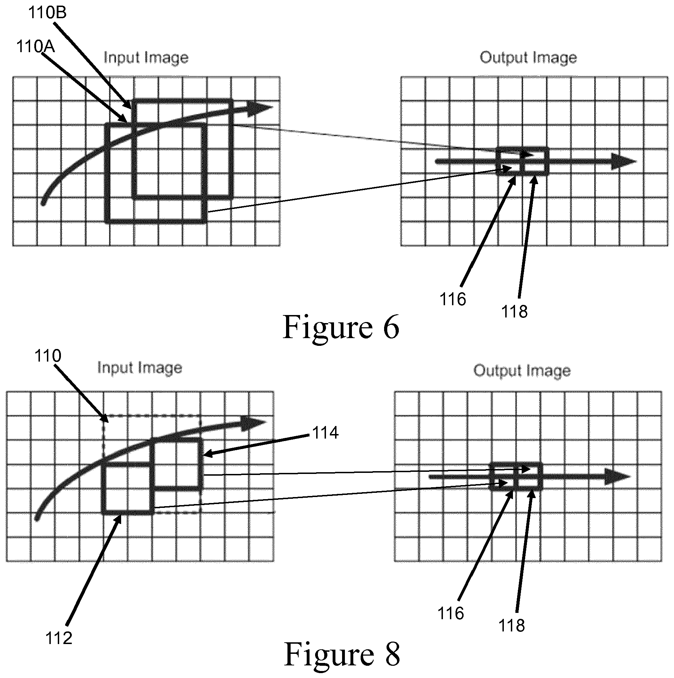

Figure 6 illustrates an output image being scanned from left to right and the corresponding 4x4 pixels 110A, 110B from the tile cache which need to be interpolated to provide respective values for two successive pixels 116,118 of the output image. Note the vertical displacement of the tile windows 110A, 110B in the tile cache relative to those of the output image to take into account image distortion.

In one embodiment of the present invention, the tile cache is arranged as 8 interleaved SRAMS to enable the 4x4 window to be read from the tile cache in a single clock cycle and thus, with a hardware interpolator, each output file pixel can be produced in a single clock cycle.

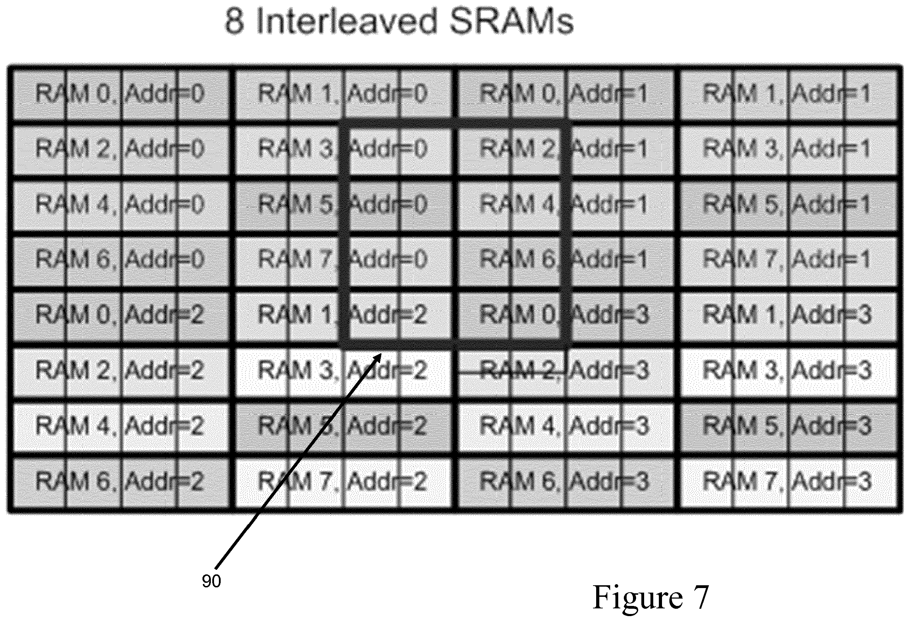

Figure 7 shows a portion of the input image stored in the tile cache. The tile cache is organized with interleaved memories in such a way that a 4x4 window of pixels can be read from any (x,y) location in one cycle. In this example the cache is organized with 8 interleaved memories and the image is stored as indicated in Figure 7. The data bus of each memory is 32 bits wide and each pixel comprises 8 bits of information. Thus, each memory word stores information for 4 adjacent pixels. With eight parallel read operations (one for each memory: RAM0 to RAM7) 32 pixels can be read in one clock cycle.

Highlighted region 90 indicates that the 4x4 window for a particular output tile pixel can be read in one clock cycle by reading in parallel from the eight memories: from RAM3(Addr=0), RAM2(Addr=1), RAM5(Addr=0), RAM4(Addr=1), RAM7(Addr=0), RAM6(Addr=1), RAM1(Addr=2), RAM0(Addr=3); and it will be seen that reading a 4x4 window from any location is always possible in one clock cycle as for each memory no more than one read from one address is needed. (It can be noted that with this interleaved memory structure half of the read pixel values are not used.)

It is of course always desirable to increase throughput when image processing and by, for example, doubling the tile cache and providing a pair of interpolators along with suitable multiplexing to select the correct pixels from each memory instance, it could be possible to process two pixels of the output image in a given clock cycle.

Embodiments of the present invention are based on being able to switch between bi-cubic and bilinear interpolation when either quality or speed respectively become a priority.

Referring to Figure 8 it will be seen that for bilinear interpolation, only a window of 2x2 pixels from the tile cache is required for generating each pixel of the output image. It will also be noted that as long as downsampling from the tile cache input image to the output image does not exceed 2x, any given 4x4 window from the tile cache will include sufficient information to enable 2 adjacent pixels of the output image to be interpolated.

In this embodiment, as well as a bi-cubic interpolator, the re-sampler comprises a pair of bi-linear interpolators (not shown). Note that in order to implement a bi-cubic interpolator in hardware, approximately 10k gates are required, whereas each bilinear interpolator comprises approximately 1k gates. The GDC controller of Figure 5 is therefore arranged to signal to the re-sampler to switch between high quality but lower speed bi-cubic interpolation and lower quality, but higher speed bi-linear interpolation.

When in bi-linear interpolation mode, the re-sampler again scans across the output image tile in raster order, but in this case, it does so, two pixels at a time. For each pair of adjacent pixels, such as pixels 116,118, the re-sampler acquires a 4x4 window 110 from the tile cache.

For the pair of pixels of the output image highlighted in Figure 8, the respective bilinear interpolators would acquire the 2x2 blocks 112 and 114 from the 4x4 window 110 read from the tile cache to produce the output image pixel values. Thus, any window such as the window 110 containing these 2x2 blocks can be read from the tile cache to enable the pair of output image pixel values 116, 118 to be generated in tandem within a given clock cycle.

In one example, the re-sampler is hardwired so that depending on the relative location of the 2x2 windows 112, 114, an appropriate bounding window 110 is chosen. In one implementation, the minimum x and y coordinates of the two 2x2 windows 112, 114 provides the corner coordinate of the 4x4 window 110. In any case, there are a limited number (9) of possible locations of one window, say the window 114, relative to the other, say the window 112, within a 4x4 window; and appropriate logic can be employed to ensure an appropriate 4x4 window is acquired for any pair of output image pixels. This logic can in turn be rationalised by making certain assumptions, for example, that the window 114 for a successive pixel would never be located to the left of a window 112 for a previous pixel.

Thus, it will be seen that for an increase in interpolator hardware of the order of 20%, a doubling of image processing speed can be selectively provided for a minimal loss of image quality.

It will therefore be seen from the above description that embodiments of the present invention provide an efficient mechanism for performing complex distortion compensation on an input image in a processor- and memory- efficient manner with minimal demands on the system bus.

It will be appreciated that the illustrated embodiment is provided for exemplary purposes only and that many variations of the implementation are possible. For example, some functionality shown as being implemented in one module could be migrated to other modules.

In the illustrated embodiment, tiles have been described as rectangular and defined by four nodes. However, it will be appreciated that although more complex, the invention could also be implemented with non-rectangular tiles defined by 3 or more nodes; and indeed the local grid need not be defined by a uniform array of tiles, these could in certain applications be non-uniform.

The invention is not limited to the embodiment(s) described herein but can be amended or modified without departing from the scope of the present invention.

**Claims**

1. An image acquisition system comprising:

   a first memory for storing at least a portion of a distorted input image acquired from an image sensor and a lens system;
   a second memory for storing a corrected output image; and
   an interpolator module connected to said first memory for reading distorted input image information and to said second memory for writing corrected output image information, said interpolator comprising: a bi-cubic interpolator; and
   a pair of bi-linear interpolators and being switchable between a first high quality mode and a second high speed mode where,
   in said first high quality mode, for each pixel for said output image, said interpolator is arranged to read a 4x4 pixel window (110) from said first memory in a single clock cycle and with said bi-cubic interpolator to interpolate said 4x4 pixel window to provide said output pixel value, and
   in said second high speed mode, for each pair of adjacent output pixels (116,118) for said corrected output image, said interpolator is arranged to read a 4x4 pixel window (110) from said first memory in a single clock cycle, said 4x4 pixel window bounding a pair of 2x2 pixel windows (112,114), each of which are interpolated in parallel by respective bi-linear interpolators of said pair of bi-linear interpolators to provide respective output pixel values of said pair of adjacent output pixels.

2. An image acquisition system according to claim 1 wherein said interpolator module is configured to select a minimum x and a minimum y value of said pair of 2x2 pixel windows as a minimum x,y value for said 4x4 pixel window.

3. An image acquisition system according to claim 1 further comprising a distortion correction module incorporating said an interpolator module and wherein said first memory comprises a cache memory within said distortion correction module, said system further comprising a system bus connecting said distortion correction module to a system memory arranged to store each of said distorted input image and said corrected output image.

4. An image acquisition system according to claim 1 wherein said first memory comprises a plurality of N interleaved memories, said memories being arranged so that said 4x4 pixel window (90) can be read from said memories in said single clock cycle.

5. An image acquisition system according to claim 3 further comprising:

   a formatter configured to:

      a) divide a local region of an image to be displayed into an array of tiles, each tile having a boundary defined by a plurality of nodes, each node having a set of coordinates within said image space;
      b) for each tile of the local region, transform said node coordinates according to at least a first local transformation to take into account a local distortion of said input image in said local region;

   wherein said distortion correction module is configured to, for each tile of the local region:

      i) read a non-rectangular portion of said distorted input image corresponding to the at least locally transformed node coordinates of said tile into said first memory; and
      ii) correct the distortion of said non-rectangular portion of said distorted input image to provide a tile of a corrected output image.

**Patentansprüche**

1. Bilderfassungssystem, umfassend:

   einen ersten Speicher zum Speichern zumindest eines Teils eines verzeichneten Eingangsbildes, das von einem Bildsensor und einem Linsensystem erhalten wird;
   einen zweiten Speicher zum Speichern eines korrigierten Ausgangsbildes; und
   ein Interpolatormodul, das mit dem ersten Speicher zum Lesen von Informationen des verzeichneten Eingangsbildes und mit dem zweiten Speicher zum Schreiben von Informationen des korrigierten Ausgangsbildes verbunden ist, wobei der Interpolator umfasst: einen bikubischen Interpolator; und ein Paar bilinearer Interpolatoren, und umschaltbar ist zwischen einem ersten Hochqualitätsmodus und einem zweiten Hochgeschwindigkeitsmodus, wobei

in dem ersten Hochqualitätsmodus der Interpolator für jedes Pixel des Ausgangsbildes dafür angeordnet ist, ein 4x4-Pixelfenster (110) aus dem ersten Speicher in einem Einzeltaktzyklus und mit dem bikubischen Interpolator zum Interpolieren des 4x4-Pixelfensters zu lesen, um den Ausgangspixelwert bereitzustellen, und in dem zweiten Hochgeschwindigkeitsmodus der Interpolator für jedes Paar benachbarter Ausgangspixel (116, 118) für das korrigierte Ausgangsbild dafür angeordnet ist, ein 4x4-Pixelfenster (110) aus dem ersten Speicher in einem Einzeltaktzyklus zu lesen, wobei das 4x4-Pixelfenster ein Paar von 2x2-Pixelfenstern (112, 114) einfasst, von denen jedes parallel durch jeweilige bilineare Interpolatoren des Paars von bilinearen Interpolatoren interpoliert wird, um jeweilige Ausgangspixelwerte des Paars benachbarter Ausgangspixel bereitzustellen.

2. Bilderfassungssystem nach Anspruch 1, wobei das Interpolatormodul dafür konfiguriert ist, einen x-Mindestwert und einen y-Mindestwert des Paars von 2x2-Pixelfenstern als x,y-Mindestwert für das 4x4-Pixelfenster auszuwählen.

3. Bilderfassungssystem nach Anspruch 1, ferner umfassend ein Verzeichnungskorrektionsmodul, welches das Interpolatormodul beinhaltet, und wobei der erste Speicher einen Cache-Speicher in dem Verzeichnungskorrektionsmodul umfasst, wobei das System ferner einen Systembus umfasst, der das Verzeichnungskorrektionsmodul mit einem Systemspeicher verbindet, der zum Speichern von jedem des verzeichneten Eingangsbildes und des korrigierten Ausgangsbildes angeordnet ist.

4. Bilderfassungssystem nach Anspruch 1, wobei der erste Speicher eine Mehrzahl von N verschachtelten Speichern umfasst, wobei die Speicher derart angeordnet sind, dass das 4x4-Pixelfenster (90) aus den Speichern in dem Einzeltaktzyklus gelesen werden kann.

5. Bilderfassungssystem nach Anspruch 3, ferner umfassend:

einen Formatierer, konfiguriert zum:

a) Aufteilen eines lokalen Bereichs eines anzuzeigenden Bildes in eine Anordnung von Kacheln, wobei jede Kachel eine durch eine Mehrzahl von Knoten definierte Begrenzung aufweist, wobei jeder Knoten einen Koordinatensatz in dem Bildraum aufweist;

b) für jede Kachel des lokalen Bereichs, Transformieren der Knotenkoordinaten gemäß zumindest einer ersten lokalen Transformation, um eine lokale Verzeichnung des Eingangsbildes in dem lokalen Bereich zu berücksichtigen;

wobei das Verzeichnungskorrektionsmodul dafür konfiguriert ist, für jede Kachel des lokalen Bereichs:

i) einen nicht-rechteckigen Teil des verzeichneten Eingangsbildes, der den zumindest lokal transformierten Knotenkoordinaten der Kachel entspricht, in den ersten Speicher einzulesen; und
ii) die Verzeichnung des nicht-rechteckigen Teils des verzeichneten Eingangsbildes zu korrigieren, um eine Kachel eines korrigierten Ausgangsbildes bereitzustellen.

**Revendications**

1. Système d'acquisition d'image comprenant :

une première mémoire pour stocker au moins une partie d'une image d'entrée déformée acquise à partir d'un capteur d'image et d'un système de lentille ;
une seconde mémoire pour stocker une image de sortie corrigée ; et
un module d'interpolateur relié à ladite première mémoire pour lire des informations d'image d'entrée déformée et à ladite seconde mémoire pour écrire des informations d'image de sortie corrigée, ledit interpolateur comprenant : un interpolateur bi-cubique ; et une paire d'interpolateurs bilinéaires, et étant commutable entre un premier mode haute qualité et un second mode de haute vitesse,
dans ledit premier mode de haute qualité, pour chaque pixel pour ladite image de sortie, ledit interpolateur étant agencé pour lire une fenêtre de 4x4 pixels (110) à partir de ladite première mémoire en un unique cycle d'horloge et, avec ledit interpolateur bi-cubique, pour interpoler ladite fenêtre de 4x4 pixels pour fournir ladite valeur de pixel de sortie, et
dans ledit second mode à haute vitesse, pour chaque paire de pixels de sortie adjacents (116, 118) pour ladite image de sortie corrigée, ledit interpolateur étant agencé pour lire une fenêtre de 4x4 pixels (110) à partir de ladite première mémoire en un unique cycle d'horloge, ladite fenêtre de 4x4 pixels délimitant une paire de fenêtres de 2x2 pixels (112, 114), chacune d'elles étant interpolée en parallèle par des interpolateurs bilinéaires respectifs de ladite paire d'interpolateurs bilinéaires pour fournir des valeurs de pixel de sortie respectives de ladite paire de pixels de sortie adjacents.

2. Système d'acquisition d'image selon la revendication 1, dans lequel ledit module d'interpolateur est configuré pour choisir une valeur minimale x et minimale y de ladite paire de fenêtres de 2x2 pixels en tant que valeur minimale x, y pour ladite fenêtre de 4x4 pixels.

3. Système d'acquisition d'image selon la revendication 1, comprenant en outre un module de correction de distorsion incorporant ledit module d'interpolateur et ladite première mémoire comprenant une mémoire cache à l'intérieur dudit module de correction de distorsion, ledit système comprenant en outre un bus système reliant ledit module de correction de distorsion à une mémoire système agencée pour stocker chacune desdites images d'entrée déformées et ladite image de sortie corrigée.

4. Système d'acquisition d'image selon la revendication 1, dans lequel ladite première mémoire comprend une pluralité de N mémoires imbriquées, lesdites mémoires étant agencées de telle sorte que ladite fenêtre de 4x4 pixels (90) peut être lue à partir desdites mémoires dans ledit unique cycle d'horloge.

5. Système d'acquisition d'image selon la revendication 3, comprenant en outre :

un formateur configuré pour :

a) diviser une région locale d'une image à afficher en un réseau de tuiles, chaque tuile ayant une frontière définie par une pluralité de noeuds, chaque noeud ayant un ensemble de coordonnées à l'intérieur dudit espace d'image ;
b) pour chaque tuile de la région locale, transformer lesdites coordonnées de noeud selon au moins une première transformation locale pour prendre en compte une distorsion locale de ladite image d'entrée dans ladite région locale ;

ledit module de correction de distorsion étant configuré pour, pour chaque tuile de la région locale :

i) lire une partie non rectangulaire de ladite image d'entrée distordue correspondant aux coordonnées de noeud transformées au moins localement de ladite tuile dans ladite première mémoire ; et
ii) corriger la distorsion de ladite partie non rectangulaire de ladite image d'entrée déformée pour fournir une tuile d'une image de sortie corrigée.

Figure 1 (Prior Art)

Figure 2 (Prior Art)

Figure 3 (Prior Art)

N1

Nn

Lt

Nn

N1

Gn1

At  Tg  At

Gn1

Tg'

Gt

Gnn

Gnn

Figure 4(a) (Prior Art)

Figure 4(b) (Prior Art)

Start   P0 (x0, y0)   P1 (x1, y1)

Step 1   P0 (x0, y0)   P1 (x1, y1)

Step 2   P0 (x0, y0)   P1 (x1, y1)

Step 3   P0 (x0, y0)   P1 (x1, y1)

...   P1 (x1, y1)

Step 11   P0 (x0, y0)   P1 (x1, y1)

## Figure 4(c) (Prior Art)

Each of these pixels
must be the center
of a 4x4 area

Coordinates found
by the Edge Tracer

Shaded area is
added by the Tile
Border Extender

## Figure 4(d) (Prior Art)

Figure 5 (Prior Art)

Figure 6

Figure 8

# 8 Interleaved SRAMs

| | | | |
|---|---|---|---|
| RAM 0, Addr=0 | RAM 1, Addr=0 | RAM 0, Addr=1 | RAM 1, Addr=1 |
| RAM 2, Addr=0 | RAM 3, Addr=0 | RAM 2, Addr=1 | RAM 3, Addr=1 |
| RAM 4, Addr=0 | RAM 5, Addr=0 | RAM 4, Addr=1 | RAM 5, Addr=1 |
| RAM 6, Addr=0 | RAM 7, Addr=0 | RAM 6, Addr=1 | RAM 7, Addr=1 |
| RAM 0, Addr=2 | RAM 1, Addr=2 | RAM 0, Addr=3 | RAM 1, Addr=3 |
| RAM 2, Addr=2 | RAM 3, Addr=2 | RAM 2, Addr=3 | RAM 3, Addr=3 |
| RAM 4, Addr=2 | RAM 5, Addr=2 | RAM 4, Addr=3 | RAM 5, Addr=3 |
| RAM 6, Addr=2 | RAM 7, Addr=2 | RAM 6, Addr=3 | RAM 7, Addr=3 |

90

Figure 7

**EP 3 101 622 B1**

**Patent documents cited in the description**

- WO 2014005783 A
- US 20100111440 A
- WO 2010051147 A